# EUROPEAN PATENT APPLICATION

(11) **EP 1 587 250 A1**
(43) Date of publication of application: **19.10.2005**
(21) Application number: 04008888.2
(22) Date of filing: 14.04.2004
(51) Int. Cl.: H04L 12/28, H04L 29/06, H04Q 7/38

(54) **VPN accelerator card for secure roaming**

(71) Applicant: AboCom Systems, Inc., Hsinchu City, Taiwan (TW)
(72) Inventor: Wen-Jiunn, Tsay, Science-Based Industrial Park, Hsinchu (TW); Cheng-Yu, Wang, Science-Based Industrial Park, Hsinchu (TW); Wei-Lee, Fan, Science-Based Industrial Park, Hsinchu (TW)
(74) Representative: Winter, Brandl, Fürniss, Hübner Röss, Kaiser, Polte Partnerschaft Patent- und Rechtsanwaltskanzlei

(57) **Abstract**

The VPN accelerator card of this invention comprises: an interface connector (1) to connect a particular interface connector slot of a computer equipment (7); an interface controller (2) to convert signals and data in a manner that such signals and data are suited for transmission to said computer equipment through said interface connector; a VPN accelerator (3) to automatically direct, after said VPN accelerator card is linked to a particular local network system (8), the computer equipment connected to said VPN accelerator card to a VPN server of a particular network system; and a local network controller (4) to automatically search a local network system (8) and to link said VPN accelerator card to said local network system.

## Description

### FIELD OF THE INVENTION

The present invention relates to a VPN accelerator card, especially to an interface card integrated with a VPN accelerator, whereby a personal computer or a notebook computer may access public networks or local network systems through the VPN accelerator card.

### BACKGROUND OF THE INVENTION

As the internet has become a necessary tool of everybody's daily life, all kinds of product that allows personal computer or notebook computer to access to the internet have been developed. Besides those that have been embedded with network communication chipset, most computer equipments need to use a network card or a wireless network card to access to the internet. The network card, wither wired or wireless, is equipped with a communication interface connector, a network communication controller IC and a network cable connector or a wireless transceiver. The network card is inserted into a particular interface connector slot of a personal computer or a notebook computer and links the personal computer or the notebook computer to the internet or other communication network through a local network system.

Such a network communication card or wireless communication card needs to be inserted into a particular interface connector slot of the computer equipment to link the computer equipment to the hub of a local network system and then to the public network system or the internet using a modem. Under such a structure, each computer equipment or network communication card needs to be linked to the VPN (virtual personal network) server of the local network system. The VPN server authenticates the identity of the computer equipment or the network communication card before it is allowed to access any data in the public network system or the internet.

During the past few years there are tremendous developments in the roaming technology. Under the current roaming technology, a personal computer or a notebook computer needs not be linked to its home network system so to access to the internet through its home network system. The personal computer or the notebook computer may access to one node of a foreign network system so to be linked to the local network system to which the foreign network system belongs. Authentication of identify of the personal computer or the notebook computer is conducted by the VPN server of the foreign local network system. Once the identity is authenticated, the personal computer or the notebook computer is authorized to access the internet through the foreign local network system.

The conventional technology as described above provides the convenience of roaming service to computer equipments that has not registered itself with the foreign network system. However, the authorization is not given by the foreign local network system. Upon the request of a computer equipment to access the network system, the foreign network system directs the computer equipment to its home network system. The VPN server authenticates the identity of the computer equipment and authorizes the computer equipment to access to the internet or other public network systems.

Nevertheless, before the authentication and authorization is conducted, the foreign network system gives the requesting computer equipment a temporary IP address, such that the computer equipment may be linked to the foreign network system. During the roaming service, the computer equipment would shift its linkage to different foreign network systems from time to time. Each foreign network system will authorize one new IP address to the computer equipment upon its linkage. As a result, the authentication and authorization process is repeated from time to time. Efficient roaming service is thus impossible.

### OBJECTIVES OF THE INVENTION

The objective of this invention is to provide a VPN accelerator card to automatically link a computer equipment to a foreign network system.

Another objective of this invention is to provide a VPN network card to facilitate the roaming service of the computer equipment.

Another objective of this invention is to provide a VPN network card to facilitate the encrypted surfing of the computer equipment.

### SUMMARY OF THE INVENTION

According to the present invention, a VPN accelerator card is provided. The invented VPN accelerator card comprises: an interface connector to connect particular interface connector slot of a computer equipment; an interface controller to convert signals and data in a manner that such signals and data are suited for transmission to said computer equipment through said interface connector; a VPN accelerator to automatically direct, after said VPN accelerator card is linked to a particular local network system, the computer equipment connected to said VPN accelerator card to VPN server of a particular network system; and a local network controller to automatically search a local network system and to link said VPN accelerator card to said local network system.

These and other objectives and advantages of this invention may be illustrated in details in the detailed description by referring to the following drawings.

### BRIEF DESCRIPTION OF THE DRAWINGS

Fig. 1 illustrates the systematic diagram of the VPN accelerator card of this invention.
Fig. 2 shows the flowchart of the connection between the VPN accelerator of the invented VPN accelerator card and a particular VPN server.

### DETAILED DESCRIPTION OF THE INVENTION

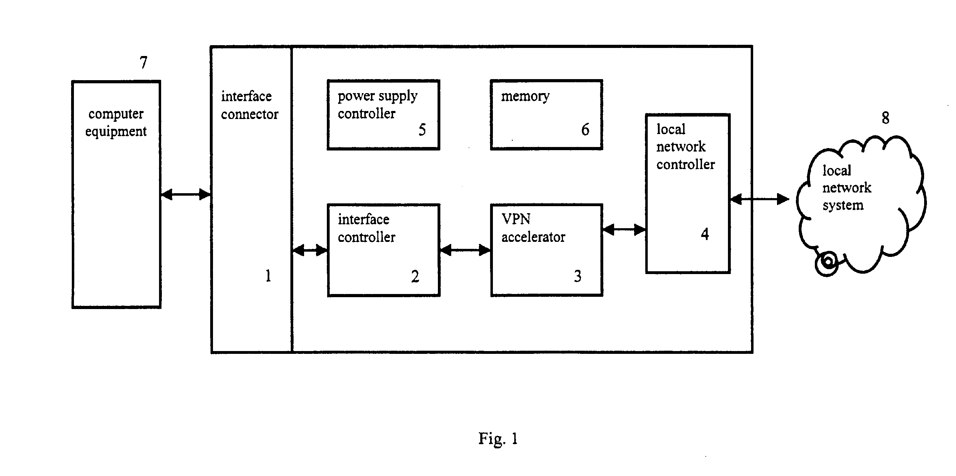

Fig. 1 illustrates the systematic diagram of the VPN accelerator card of this invention. As shown in this figure, the VPN accelerator card of this invention comprises: an interface connector 1 to connect particular interface connector slot of a computer equipment 7; an interface controller 2 to convert signals and data in a manner that such signals and data are suited for transmission to the computer equipment 7 through the interface connector 1; a VPN accelerator 3 to automatically direct, after said VPN accelerator card is linked to a particular local network system, the computer equipment 7 connected to said VPN accelerator card to VPN server of a particular network system; and a local network controller 4 to automatically search a local network system 8 and to link said VPN accelerator card to said local network system 8. The VPN accelerator card of this invention may further comprise a power supply controller 5 to obtain electric power from a power supply (not shown), such as the computer equipment 7 or other power source; and a memory 6 to temporarily store data needed by the VPN accelerator card.

In the present invention, the interface connector 1 may be any connector that complies with any particular interface protocol and that may be inserted in signal connection to particular connector slot of the computer equipment 7. Suited interface protocol includes: Express Card, CardBus, PCMCIA, PS2 and other existing or future interface standards. The interface controller 2 thus is provided with conversion logics to convert signals and data generated by the VPN accelerator card or signals and data obtained from the computer equipment 7, to facilitate the communication between the VPN accelerator card and the computer equipment 7. In addition, the local network controller 4 may include a data transceiver to automatically search a local network system 8, to link with the local network system 8 and to transmit and receive data and signals to and from the local network system 8. The interface controller 2 and the local network controller 4 may be any commercially available product or any known circuit or software. As they belong to the conventional art, detailed description is thus omitted.

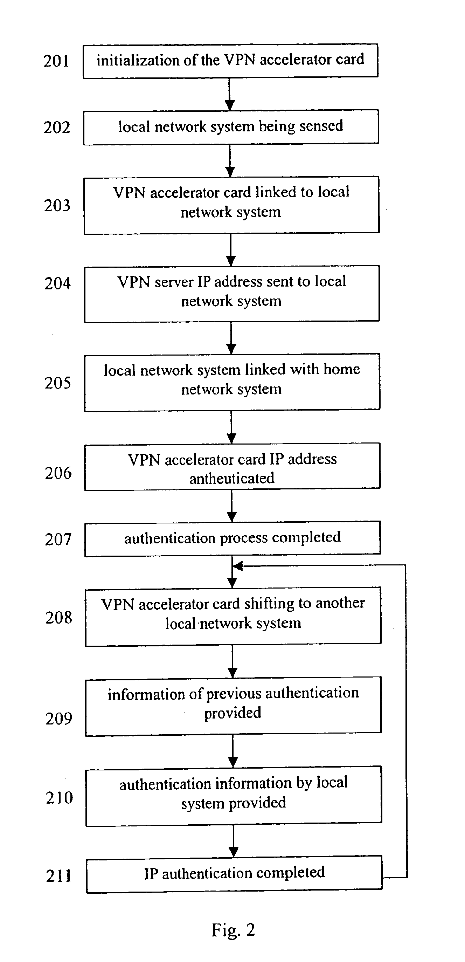

The VPN accelerator 3 as used in this invention serves to direct the computer equipment 7 to the VPN server of particular network systems through any local network system to which the VPN accelerator card may be linked. Fig. 2 shows the flowchart of the connection between the VPN accelerator of the invented VPN accelerator card and a particular VPN server.

As shown in this figure, when the VPN accelerator card is inserted into the connector slot of the computer equipment 7, at 201 the power supply controller 5 obtains electric power from the computer equipment 7 and initializes the operation of the VPN accelerator card. At 202 the local network controller 4 senses the local network system 8. At 203 the VPN accelerator 3 links the VPN accelerator card to the local network system 8 and obtains a temporary IP address from the local network system 8 according to applicable communication protocol. At 204 the VPN accelerator 4 provides address of the VPN server of its home network system to the local network system 8 and requests to link the VPN accelerator card to the VPN server of its home network system. At 205 the local network system 8 is linked with the VPN server of the home network system and provides the IP address of the VPN accelerator card to the home network system. At 206 the VPN server of the home network system authenticates the VPN accelerator card and announces result of such authentication to the local network system 8. At 207 the authentication process of the local network system 8 is completed, such that the computer equipment 7 is allowed to access the internet through the local communication network 8 and its VPN server.

At 208 the VPN accelerator card shifts to the reachable area of another local network system and the local network controller 4 senses the new local network system. At 209 the VPN accelerator 3 provides information of the previous authentication to the new local network system. At 210 the new local network system provides the authentication information to the VPN server of its network system and the VPN server authenticates the VPN accelerator card according to an applicable communication protocol. At 211 IP authentication by the VPN server is completed and the result is provided to the new local network system. The authentication is thus completed and the VPN accelerator card is allowed to access the interne through the new local network system and is VPN server.

When the VPN accelerator card enters into the reachable area of another new local network system, steps 208 to 211 are repeated. The linkage of the computer equipment with the internet is made continuously.

As described above, in the VPN accelerator card of this invention the communiation interfacing technology and the VPN accelerator technology are integrated to generate a useful VPN accelerator card. The encryption functions of the current mobile networking technology may also be provided. The VPN accelerator card of this invention provides convenient portability to the computer equipment, such that the user may access to the internet at any place where a local network system is reachable.

As the present invention has been shown and described with reference to preferred embodiments thereof, those skilled in the art will recognize that the above and other changes may be made therein without departing form the spirit and scope of the invention.

## Claims

1. A VPN accelerator card comprising:
an interface connector to connect particular connector slot of a computer equipment;
an interface controller to convert signals and data in a manner that such signals and data are suited for transmission to said computer equipment through said interface connector;
a VPN accelerator to automatically direct, after said VPN accelerator card is linked to a particular local network system, said computer equipment to VPN server of a particular network system; and
a local network controller to automatically search a local network system and to link said VPN accelerator card to said local network system.

2. The VPN accelerator card according to claim 1, further comprising a power supply controller to obtain electric power from a power supply.

3. The VPN accelerator card according to claim 1, further comprising a memory to temporarily store data needed by said VPN accelerator card.

4. The VPN accelerator card according to claim 1, wherein said local network controller includes a data transceiver to automatically search a local network system, to link with said local network system and to transmit and receive data and signals to and from the local network system.

## Amended claims

### Amended claims in accordance with Rule 86(2) EPC.

**1.** Card, comprising:
an interface connector (1) to connect to a particular connector slot of a computer equipment (7);
an interface controller (2) to convert signals and data in a manner that such signals and data are suited for transmission to said computer equipment (7) through said interface connector (1); and
a local network controller (4) to automatically search a local network system,
***characterized in that**:*
said card is a VPN accelerator card and further comprises a VPN accelerator (3),
said local network controller links said VPN accelerator to said local network system, and
said VPN accelerator (3) automatically directs, after said VPN accelerator card is linked to said local network system, said computer equipment (7) to a VPN server (114) of a particular network system.

**2.** Card according to claim 1, ***characterized by*** a power supply controller (5) to obtain electric power from a power supply.

**3.** Card according to claim 1, ***characterized by*** a memory (6) to temporarily store data needed by said VPN accelerator card.

**4.** Card according to claim 1, ***characterized in that*** said local network controller (4) includes a data transceiver to automatically search said local network system, to link to said local network system and to transmit an receive data and signals to and from said local network system.
